(19) 

**Europäisches Patentamt**
**European Patent Office**
**Office européen des brevets**

(11) **EP 4 625 227 A1**

(12) **EUROPEAN PATENT APPLICATION**

(43) Date of publication:
**01.10.2025 Bulletin 2025/40**

(21) Application number: **24216284.0**

(22) Date of filing: **28.11.2024**

(51) International Patent Classification (IPC):
*G06F 21/60* *(2013.01)*

(52) Cooperative Patent Classification (CPC):
**G06F 21/60**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **28.03.2024 CN 202410371126**

(71) Applicant: **Beijing Volcano Engine Technology Co., Ltd.**
**Beijing 100190 (CN)**

(72) Inventors:
• **ZHANG, Zheng**
  **Beijing 100028 (CN)**
• **ZHANG, Yao**
  **Beijing 100028 (CN)**
• **WU, Ye**
  **Beijing 100028 (CN)**

(74) Representative: **Marks & Clerk LLP**
  **15 Fetter Lane**
  **London EC4A 1BW (GB)**

(54) **METHOD FOR IMPLEMENTING SECURE MODEL INFERENCE AND RELATED DEVICE**

(57) The present disclosure provides a method for implementing secure model inference and a related device. The method includes: dividing at least partial convolution kernels of a first model in a trusted execution environment into a group(s), and performing obfuscation processing on the group(s) by using random information to obtain an encrypted second model, wherein obfuscation information used during the obfuscation processing is stored in the trusted execution environment, and the obfuscation information comprises grouping information of the convolution kernels and the random information corresponding to the group(s); deploying the second model in a model inference environment, and performing model inference on input information by using the second model to obtain a first output result; and processing the first output result by using the obfuscation information in the trusted execution environment to obtain a second output result.

Divide at least partial convolution kernels of a first model in a trusted execution environment into a group(s), and performing obfuscation processing on the group(s) by using random information to obtain an encrypted second model, wherein obfuscation information used during the obfuscation processing is stored in the trusted execution environment, and the obfuscation information comprises grouping information of the convolution kernels and the random information corresponding to the group(s) — 101

Deploy the second model in a model inference environment, and perform model inference on input information by using the second model to obtain a first output result — 103

Process the first output result by using the obfuscation information in the trusted execution environment to obtain a second output result — 105

Fig. 1

## Description

## CROSS-REFERENCE TO RELATED APPLICATIONS

This application claims the priority of Chinese Application for Invention No. 202410371126.3, filed to the Patent Office of the People's Republic of China on March 28, 2024, the entire content of which is incorporated herein by reference.

## TECHNICAL FIELD

The present disclosure relates to the field of computer technology, and more particularly, to a method for implementing secure model inference and a related device.

## BACKGROUND

In recent years, thanks to the continuous development of artificial intelligence technology, various artificial intelligence products have been widely used in payment, risk control, security, intelligent driving, and other aspects. With the popularization of artificial intelligence applications, more convenient and efficient user experience has become everyone's pursuit goal. Therefore, on the basis of the traditional "cloud service", artificial intelligence is gradually directly applied to the end side, and all model loading and inference operations are directly completed on the terminal device or the edge device. However, it also brings a series of risks and challenges. Among them, how to protect the security of the end-side model is one of the issues that everyone is very concerned about.

In order to protect the security of the model, the related art provides some model obfuscation methods to protect the model by obfuscating and encrypting the model parameters. However, current model obfuscation methods can restore some of the obfuscated model parameters from the obfuscated model, and then the model can be restored according to these parameters, which affects the security of the model and user data.

## SUMMARY

In view of this, an objective of the present disclosure is to propose a method for implementing secure model inference and a related device.

Based on the above objective, a first aspect of the present disclosure provides a method for implementing secure model inference, comprising:

dividing at least partial convolution kernels of a first model in a trusted execution environment into a group(s), and performing obfuscation processing on the group(s) by using random information to obtain an encrypted second model, wherein obfuscation information used during the obfuscation processing is stored in the trusted execution environment, and the obfuscation information comprises grouping information of the convolution kernels and the random information corresponding to the group(s);

deploying the second model in a model inference environment, and performing model inference on input information by using the second model to obtain a first output result; and

processing the first output result by using the obfuscation information in the trusted execution environment to obtain a second output result.

In some embodiments, the dividing at least partial convolution kernels of the first model in the trusted execution environment into a group(s) comprises:

dividing convolution kernels in any convolutional layer in the first model into the group(s); and/or
mixing and dividing convolution kernels in a plurality of convolutional layers in the first model into the group(s).

In some embodiments, the method further comprises:
dividing a preset number of convolution kernels with a smallest cosine similarity into a group.

In some embodiments, random information corresponding to each of the group(s) comprises vector groups with a same number as that of convolution kernels in the each of the group(s) and the vector groups are linearly independent; and the performing obfuscation processing on the group(s) by using the random information comprises: calculating a product of the each of the group(s) and the vector groups corresponding to the each of the group(s).

In some embodiments, different groups correspond to different random information.

In some embodiments, the method further comprises:
randomly shuffling indices of convolution kernels after the obfuscation processing.

In some embodiments, the first output result comprises intermediate output results corresponding to different convolutional layers of the second model and a final output result of the second model; and

the processing the first output result by using the obfuscation information in the trusted execution environment to obtain the second output result comprises:
transmitting an intermediate output result to the trusted execution environment, performing reverse operation on the intermediate output result based on the obfuscation information to obtain an intermediate operation result, and sending the intermediate operation result to the second model for operation of a next convolutional layer; and looping the above process until the operation of all the convolutional layers of the second model is completed to obtain the final output result of the second model; transmitting the final output result of the second model to the trusted execution environment, and performing reverse operation on the final output result of the second model based on the obfuscation information to obtain the second output result.

In some embodiments, the intermediate output results, the intermediate operation results, and the final output result are encrypted during transmission between the trusted execution environment and the second model.

In some embodiments, the second model is run in an acceleration device; and the performing model inference on the input information by using the second model comprises:
accelerating linear calculation in the second model by using the acceleration device.

In a second aspect, the present disclosure provides a model security evaluation method, comprising:

obtaining a to-be-evaluated model, where the to-be-evaluated model comprises the second model according to the first aspect;
determining a type of the to-be-evaluated model, and obtaining a public pre-trained model corresponding to the to-be-evaluated model based on the type of the to-be-evaluated model;
performing statistical analysis on the to-be-evaluated model and the pre-trained model to obtain obfuscated content and an obfuscation method of the to-be-evaluated model;
restoring the to-be-evaluated model based on the pre-trained model, the obfuscated content and the obfuscation method of the to-be-evaluated model to obtain a restored model; and
determining security of the to-be-evaluated model based on a comparison result of output information of the restored model and output information of the to-be-evaluated model.

In a third aspect, the present disclosure provides an apparatus for implementing secure model inference, comprising:

an obfuscation module, configured to: divide at least partial convolution kernels of a first model in a trusted execution environment into a group(s), and performing obfuscation processing on the group(s) by using random information to obtain an encrypted second model, wherein obfuscation information used during the obfuscation processing is stored in the trusted execution environment, and the obfuscation information comprises grouping information of the convolution kernels and the random information corresponding to the group(s);
an inference module, configured to: deploy the second model in a model inference environment, and perform model inference on input information by using the second model to obtain a first output result; and
a processing module, configured to: process the first output result by using the obfuscation information in the trusted execution environment to obtain a second output result.

In a fourth aspect, the present disclosure provides a model security evaluation apparatus, comprising:

an obtaining module, configured to: obtain a to-be-evaluated model, where the to-be-evaluated model comprises the second model according to the first aspect;
a determination module, configured to: determine a type of the to-be-evaluated model, and obtain a public pre-trained model corresponding to the to-be-evaluated model based on the type of the to-be-evaluated model;
an analysis module, configured to: perform statistical analysis on the to-be-evaluated model and the pre-trained model to obtain obfuscated content and an obfuscation method of the to-be-evaluated model;
a restoration module, configured to: restore the to-be-evaluated model based on the pre-trained model, the obfuscated content and the obfuscation method of the to-be-evaluated model to obtain a restored model; and
a security module, configured to: determine security of the to-be-evaluated model based on a comparison result of output information of the restored model and output information of the to-be-evaluated model.

In a fifth aspect, the present disclosure provides an electronic device, comprising a memory, a processor, and a computer program stored in the memory and executable on the processor, where the processor, when executing the program, implements the method according to the first aspect or the second aspect.

In a sixth aspect, the present disclosure provides a computer program product, comprising computer program instructions, where the computer program instructions, when executed on a computer, cause the computer to perform the method according to the first aspect or the second aspect.

As can be seen from the above, the method for implementing secure model inference and the related devices provided by the present disclosure store the first model in the trusted execution environment, divide the at least partial convolution kernels in the first model into the group(s), and perform the obfuscation processing on the group(s) by using the random information, so as to obtain the encrypted second model. The obfuscation information used during the obfuscation processing is stored in the trusted execution environment, thus introducing a sufficient amount of randomness and thoroughly obfuscating the convolution kernels, ensuring parameter security when the model is deployed to the edge device, and preventing the model and user information from being disclosed during the inference process.

## BRIEF DESCRIPTION OF THE DRAWINGS

In order to more clearly explain the technical solutions in the present disclosure or the related art, the drawings required in the description of the embodiments or the related art will be briefly introduced below. Obviously, the drawings in the following description are only embodiments of the present disclosure, and for those of ordinary skill in the art, other drawings can be obtained based on these drawings without paying creative efforts.

FIG. 1 shows a schematic flowchart of an exemplary method provided by embodiments of the present disclosure.
FIG. 2 shows a schematic diagram of an example of an obfuscation of convolution kernels according to an embodiment of the present disclosure.
FIG. 3 shows a schematic flowchart of an exemplary method provided by embodiments of the present disclosure.
FIG. 4 shows a schematic flowchart of an exemplary method provided by an embodiment of the present disclosure.
FIG. 5 shows a schematic diagram of an example result according to an embodiment of the present disclosure.
FIG. 6 shows a schematic diagram of an example result according to an embodiment of the present disclosure.
FIG. 7 shows a schematic flowchart of an exemplary method provided by embodiments of the present disclosure.
FIG. 8 shows a schematic diagram of an exemplary apparatus provided by an embodiment of the present disclosure.
FIG. 9 shows a schematic diagram of an exemplary apparatus provided by an embodiment of the present disclosure.
FIG. 10 shows a schematic diagram of a hardware structure of an example computer device provided by an embodiment of the present disclosure.

## DETAILED DESCRIPTION

In order to make the objectives, technical solutions and advantages of the present disclosure clearer, the present disclosure will be further explained in detail below with reference to specific embodiments and the drawings.

It should be noted that, unless otherwise defined, technical or scientific terms used in the embodiments of the present disclosure should have the general meaning understood by those of ordinary skill in the art to which the present disclosure belongs. "First", "second" and similar words used in the embodiments of the present disclosure do not indicate any order, quantity or importance, but are only used to distinguish different components. Similar words such as "comprise" or "comprise" mean that the components or objects before the word cover the components or objects listed after the word and their equivalents, without excluding other components or objects. Similar words such as "connection" or "connected" are not limited to physical or mechanical connection, but can comprise electrical connection, whether direct or indirect. "Up", "down", "left", "right", etc. are only used to indicate a relative positional relationship, and after the absolute position of the described object changes, the relative positional relationship may also change accordingly.

As mentioned in the background technology, as the application of model inference services on edge devices becomes more and more important, users tend to deploy the inference services to edge devices equipped with powerful accelerators such as GPU or NPU to reduce the latency and instability of cloud communication. However, since the terminal device is more open and easier to be debugged and analyzed, especially in a useroriented scenario, any user can download the model to the local device through an APP, which makes the edge device untrustworthy, and directly loading the model parameters may affect the security of the model or user data.

In order to improve the security of the model deployed on the edge device, at present, a cryptography-based and trusted execution environment (TEE)-based hardware acceleration secure outsourcing inference scheme can be used to encrypt the model.

Among them, the cryptography scheme is safe and provable, but it brings higher overhead and precision loss; while the TEE-based scheme has a low inference delay and no precision loss, and is more suitable for the field of on-device inference.

For the TEE-based scheme, one method is to shield certain layers in the TEE, but this method has been broken. Another method is to obfuscate the model to ensure that the GPU cannot directly use the offloaded parameters, and use the secret information stored in the TEE to ensure the normal progress of inference. This type of solution is more concealed, and a passive adversary performing black-box attacks is introduced to analyze the security performance of its own model.

However, these solutions make few modifications to the model parameters during the obfuscation process, which results in the possibility to restore some secret parameters from the obfuscated model.

In view of this, an embodiment of the present disclosure provides a method for implementing secure model inference to solve the above problem.

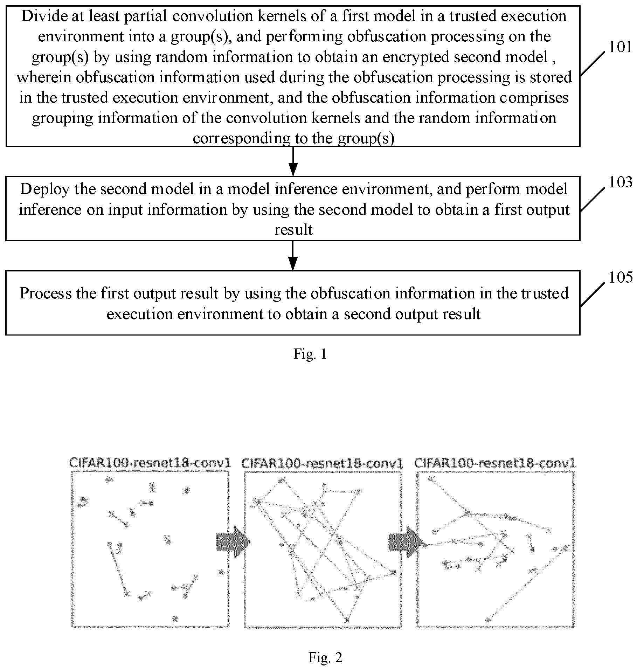

As shown in FIG. 1, the method for implementing secure model inference comprises the following steps.

Step S101: at least partial convolution kernels of a first model in a trusted execution environment are divided into a group(s), and obfuscation processing is performed on the group(s) by using random information to obtain an encrypted second model. Obfuscation information used during the obfuscation processing is stored in the trusted execution environment, and the obfuscation information comprises grouping information of the convolution kernels and the random information corresponding to the group(s).

The first model is a trained model that can be used to implement an inference function. The first model may be trained by using any model training method, which is not limited in the embodiment.

The first model may be any type of model such as a neural network model, a clustering model, a reinforcement learning model, a natural language processing model, and the like, which is not limited in the embodiment.

In the embodiment, after the first model is obtained, the first model may be deployed to the trusted execution environment (TEE) of a terminal device.

The trusted execution environment is a hardware-based security technology. A secure computing environment isolated from the outside is constructed by dividing a secure part and an unsecure part, and the secure computing environment can ensure confidentiality and integrity of data and code loaded therein. For example, the trusted execution environment may comprise Intel SGX, TDX, AMD SEV, ARM TrustZone, etc.

In the embodiment, after the first model is obtained, convolution kernels in convolutional layers of the first model may be obtained, and the convolution kernels may be randomly grouped (divided into the group(s)). Each group may comprise a certain number of convolution kernels. Then, the obfuscation processing is performed on each group by using the random information, so as to implement model obfuscation and model encryption of the first model, thereby obtaining the second model. The second model has basically the same inference precision as the first model.

In the embodiment, the obfuscation information used during the obfuscation processing, such as grouping information of the convolution kernels and the random information corresponding to the group(s), is stored in the trusted execution environment, thereby ensuring security of the obfuscation information, and preventing the obfuscation information from being acquired by an adversary, who then acquires the obfuscation information to perform reverse obfuscation operation on the second model to restore the first model.

In the embodiment, partial convolution kernels of the first model may be grouped, and then the convolution kernels in each group may be obfuscated by using the randomly generated random information. The more the number of convolution kernels grouped and obfuscated by using the random information, the more difficult it is to restore the encrypted second model.

Assuming that the first model comprises 16 convolution kernels and each group comprises 4 convolution kernels. When there is only one group, that is, when the group of 4 convolution kernels is obfuscated by using only one group of random information, if the obfuscated second model is analyzed with a public pre-trained model (the pre-trained model corresponds to the first model, for example, the first model is obtained by training based on the pre-trained model), since 12 convolution kernels in the second model are not obfuscated, that is, the two models have 12 identical convolution kernels, it is easy to determine the 4 obfuscated convolution kernels in the second model based on the 12 identical convolution kernels, and the first model can be restored only by analyzing and processing the 4 convolution kernels.

When there are two groups, that is, when the two groups of 4 convolution kernels are obfuscated by using two groups of random information, if the obfuscated second model is analyzed with the public pre-trained model, since 8 convolution kernels in the second model are not obfuscated, that is, the two models have 8 identical convolution kernels, the 8 obfuscated convolution kernels in the second model are determined based on the 8 identical convolution kernels, and the first model needs to be restored by analyzing and processing the 8 convolution kernels, which is more complex than analyzing and processing the 4 convolution kernels to restore the first model in the aforementioned embodiment.

Furthermore, if the 16 convolution kernels are divided into four groups and the four groups are all obfuscated by using four groups of random information, the first model needs to be restored by analyzing and processing the 16 convolution kernels, which is more difficult to achieve.

That is, in the embodiment, when all convolution kernels are grouped, and then each group is obfuscated by using the random information, the obtained second model is more difficult to be restored, and the security is higher.

In some embodiments, when the convolution kernels in the first model are grouped, the number of convolution kernels in each group may be the same or different, which is not limited in the embodiment.

In the embodiment, the steps of dividing the convolution kernels in the first model into the group(s) and performing the obfuscation processing on the group(s) by using the random information are also executed in the trusted execution environment, thereby ensuring security of the model during the obfuscation processing process.

Step S103: the second model is deployed in a model inference environment, and model inference is performed on input information by using the second model to obtain a first output result.

In the embodiment, the second model in the model inference environment may be used to perform the model inference, and when the input information is input, the second model may obtain the first output result.

The model inference environment may comprise an edge device or a terminal device, and generally, the model inference environment is a non-trusted execution environment.

In the embodiment, after the second model is obtained, the second model is stored in the model inference environment, and then various types of computing resources of the model inference environment may be used to assist the inference process of the second model, so as to implement the inference process of the second model.

Step S105: the first output result is processed by using the obfuscation information in the trusted execution environment to obtain a second output result.

In the embodiment, when the second model outputs the first output result, the second model transmits the first output result to the trusted execution environment, and then the trusted execution environment performs reverse operation on the first output result based on the pre-stored obfuscation information, such as the grouping information of the convolution kernels in the convolutional layers and the random information corresponding to each group, so as to restore the first output result, thereby obtaining the correct output result corresponding to the first model, i.e., the second output result.

In the method for implementing secure model inference described in the embodiment, the first model is stored in the trusted execution environment, the at least partial convolution kernels in the first model are divided into the group(s), and the group(s) is obfuscated by using the random information, so as to obtain the encrypted second model.. The obfuscation information used during the obfuscation processing is stored in the trusted execution environment, thus introducing a sufficient amount of randomness and thoroughly obfuscating the convolution kernels, ensuring parameter security when the model is deployed to the edge device, and preventing the model and user information from being disclosed during the inference process.

In some embodiments, the dividing at least partial convolution kernels of the first model in the trusted execution environment in step S101 comprises: dividing convolution kernels in any convolutional layer in the first model into the group(s).

In the embodiment, when the convolution kernels in the first model are grouped, the convolution kernels in the same convolutional layer may be grouped, and the convolution kernels will not be grouped across convolutional layers. That is, in the embodiment, in response to the first model comprises a plurality of convolutional layers, the convolution kernels in each convolutional layer are grouped separately, that is, the convolution kernels in each group belong to a same convolutional layer.

In some embodiments, the dividing the at least partial convolution kernels of the first model in the trusted execution environment in step S101 comprises: mixing and dividing convolution kernels in a plurality of convolutional layers in the first model into the group(s).

In the embodiment, when the convolution kernels in the first model are grouped, the convolution kernels in the plurality of convolutional layers are mixed and grouped, that is, the convolution kernels may be grouped across the convolutional layers. That is, in the embodiment, in response to the first model comprising a plurality of convolutional layers, the convolution kernels in the plurality of convolutional layer are mixed and grouped, that is, the convolution kernels in each group may belong to different convolutional layers.

In some embodiments, convolution kernels in each of some convolutional layers in the first model may be grouped; and convolution kernels in some other convolutional layers in the first model may be mixed and grouped, which is not limited in the embodiment.

In the above embodiments, whether the convolution kernels in each convolutional layer are grouped separately or the convolution kernels in the plurality of convolutional layers are mixed and grouped, convolution kernels in some of the convolutional layers may be grouped, or convolution kernels in all of the convolutional layers may be grouped. At the same time, the more convolutional layers are grouped, the more randomness can be introduced during obfuscation, the more sufficient the obfuscation processing is, and the more difficult it is to restore the first model before obfuscation, and the higher the security.

In some embodiments, the method further comprises: dividing a preset number of convolution kernels with the smallest cosine similarity into a group. The preset number may be a number set by the user, for example, it may be 4. The user may reasonably set the number of convolution kernels in each group based on the number of convolution kernels, complexity during model obfuscation, and other conditions, which is not limited in the embodiment.

In the embodiment, since two points with the smallest cosine similarity are easily distinguished by statistical analysis, clustering and obfuscating the points with the furthest distribution can make the convolution kernels tend to be randomly distributed in similarity.

FIG. 2 shows a viewable diagram of performing t-SNE dimension reduction to a two-dimensional plane on the first layer of convolution kernels of resnet18 under the CIFAR100 dataset. Specifically, "×" represents the first model, and "·" represents the public pre-trained model. For clarity, only 16 convolution kernels are selected. The convolution kernels with the same indices are connected by lines. It can be seen that in the left figure, the distribution of the convolution kernels with the same indices is very similar. Then, the four convolution kernels with the furthest distance are mutually obfuscated by using the method of the embodiment of the present application. As shown in the middle figure, the linearly connected points are a cluster. After linear combination are shuffled, it is not feasible to determine the indices before obfuscation according to the format of the left figure. In the right figure, the most similar convolution kernels before obfuscation are also connected. It can be seen that the statistical distribution characteristics of the atoms have been completely disrupted, and it is difficult to recover the convolution kernels of the model.

In some embodiments, the random information corresponding to each of the group(s) comprises vector groups with the same number as that of convolution kernels in the each of the group(s) and the vector groups are linearly independent; and the performing obfuscation processing on the group(s) by using the random information in step S103 comprises: calculating a product of the each of the group(s) and the vector groups corresponding to the each of the group(s).

Taking each group comprising 4 convolution kernels with the smallest cosine similarity as an example, for each group $\{w_1^i, \ w_2^i, \ w_3^i, \ w_4^i\}$, 4 linearly independent vector groups $\{a^{(1)}, \dots , a^{(4)}\}$ are randomly selected to randomly combine points in the group, and the product of the vector groups and the group is calculated. For a single convolution kernel, the obfuscated result is $w_j^{i'} = a^{(j)}[w_1^i$,

$$w_2^i, \ w_3^i, \ w_4^i]^T = a_1^{(j)}w_1^i + a_2^{(j)}w_2^i + a_3^{(j)}w_3^i + a_4^{(j)}w_4^i$$.

Correspondingly, convolution kernels in other groups are also mutually obfuscated, and the result may be expressed as:

$$W' = \begin{bmatrix} \dots \\ a_1^{(1)}w_1^i + a_2^{(1)}w_2^i + a_3^{(1)}w_3^i + a_4^{(1)}w_4^i \\ \dots \\ a_1^{(2)}w_1^i + a_2^{(2)}w_2^i + a_3^{(2)}w_3^i + a_4^{(2)}w_4^i \\ \dots \\ a_1^{(3)}w_1^i + a_2^{(3)}w_2^i + a_3^{(3)}w_3^i + a_4^{(3)}w_4^i \\ \dots \\ a_1^{(4)}w_1^i + a_2^{(4)}w_2^i + a_3^{(4)}w_3^i + a_4^{(4)}w_4^i \\ \dots \end{bmatrix}$$

In this way, the convolution kernels in each group mutually obfuscate the statistical features of each other, which makes it difficult to restore the first model before obfuscation, and ensures the security of the first model.

In some embodiments, different groups correspond to different random information, that is, the random information corresponding to each group is randomly generated and inconsistent, so as to ensure that more randomness is introduced in the obfuscation process, the obfuscation processing is more sufficient, and the first model before obfuscation is more difficult to restore and has higher security.

In some embodiments, the method further comprises: randomly shuffling indices of the convolution kernels after the obfuscation processing, i.e., shuffling the convolution kernels after the obfuscation processing. That is, shuffling the convolution kernels after the obfuscation processing in a shuffling or other manners, randomly shuffling the indices of the convolution kernels, and then randomly shuffling connection relationships of the convolution kernels, thereby further implementing obfuscation processing of the model. After the shuffling process is completed, an obfuscated weight matrix can be obtained, and then the encrypted second model can be obtained.

In some embodiments, the first output result comprises intermediate output results corresponding to different convolutional layers of the second model and a final output result of the second model; and

the processing the first output result by using the obfuscation information in the trusted execution environment to obtain the second output result in step S105 comprises: transmitting an intermediate output result to the trusted execution environment, performing reverse operation on the intermediate output result based on the obfuscation information to obtain an intermediate operation result, and sending the intermediate operation result to the second model for operation of a next convolutional layer; and looping the above process until the operation of all the convolutional layers of the second model is completed to obtain the final output result of the second model; transmitting the final output result of the second model to the trusted execution environment, and performing reverse operation on the final output result of the second model based on the obfuscation information to obtain the second output result.

The first output result may comprise intermediate output results corresponding to different convolutional layers. In the embodiment, in response to the second model outputting an intermediate output result corresponding to a certain convolutional layer, the second model transmits the intermediate output result to the trusted execution environment, and then the trusted execution environment performs reverse operation on the intermediate output result based on the pre-stored obfuscation information, i.e., the grouping information of the convolution kernels in the convolutional layer and the random information corresponding to each group, so as to restore the intermediate output result to obtain an intermediate operation result, where the intermediate operation result is an output result of the corresponding convolutional layer when performing inference directly based on the first model. Then, the intermediate operation result is returned to the second model for operation of the next convolutional layer, and the above process is looped until the operation of all the convolutional layers of the second model is completed to obtain the final output result of the second model.

In response to the second model completing all inferences, i.e., the first output result comprises the final output result of the second model, the second model transmits the final output result of the second model to the trusted execution environment, and the trusted execution environment performs reverse operation on the final output result of the second model based on the obfuscation information to obtain the correct output result corresponding to the first model, i.e., the second output result.

In the embodiment, in order to ensure data security, the intermediate output results, the intermediate operation results, and the final output result are encrypted during transmission between the trusted execution environment and the second model, for example, the intermediate output results, the intermediate operation results, and the final output result are masked, so as to ensure data security.

In some embodiments, the second model is run in an acceleration device such as a graphics processing unit (graphics processing unit, GPU) or a network processing unit (network processing unit, NPU); and the performing the model inference on the input information by using the second model comprises: accelerating linear calculation in the second model by using the acceleration device, so that the operation speed of model inference can be improved.

In the embodiment, a core of the model inference is to restore the correct output result in the trusted execution environment. In the embodiment, the overall inference process is divided into a plurality of offload layers with linear layers as boundaries. Each offload layer safely amortizes heavy linear operations to a non-trusted execution environment for operation to utilize more computing resources (such as GPU acceleration) in the non-trusted execution environment for calculation, and non-linear operations with smaller operation volume are performed in the TEE. Taking the inference process of one offload layer as an example, the process is shown below.

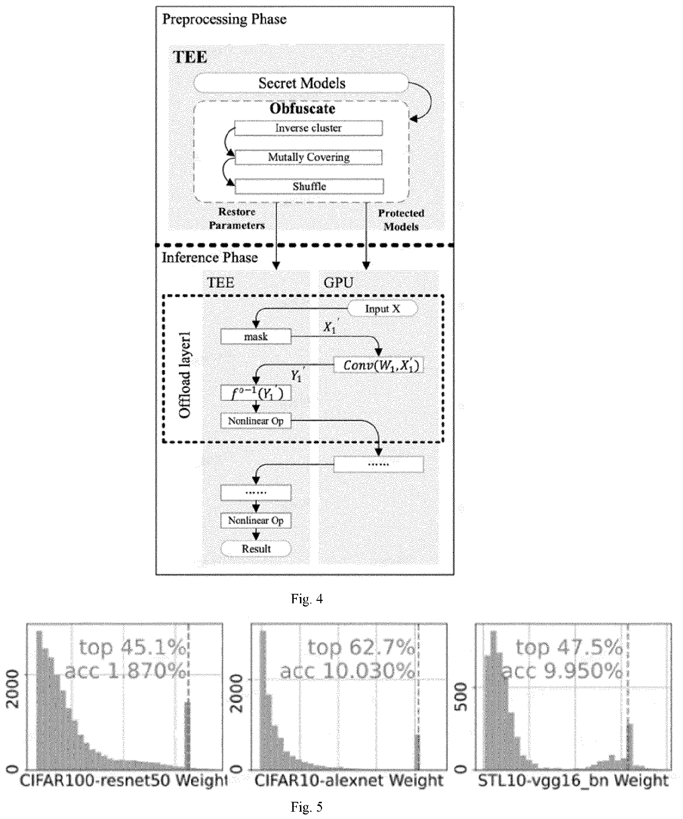

As shown in FIG. 4, the method for implementing secure model inference comprises a preprocessing phase and an inference phase.

In the preprocessing phase, performing an obfuscation processing on a first model (i.e., Secret Models) deployed in a trusted execution environment (TEE). The obfuscation processing can be implemented by methods comprising inverse clustering (Inverse cluster), random combination (Mutally Covering), and shuffling (shuffle). Specifically, a preset number of convolution kernels with a smallest cosine similarity in convolution kernels of respective convolutional layers of the first model may be divided into a group, and then indices of the convolution kernels are randomly shuffled, so as to obtain a second model (i.e., Protected Models), and the second model is deployed in a GPU of an edge device or a terminal device.

In the inference phase, for an input X, the input X is sent to the trusted execution environment for masking to obtain $X'_1$, and $X'_1$ is input into respective convolutional layers of the second model.

For a linear obfuscation method $f^0$, $Y' = f^0(Y) = Conv(W', X)$ is satisfied. For 4 output channels in a group, a corresponding output result may be expressed as:

$$\begin{bmatrix} y_1'^i \\ y_2'^i \\ y_3'^i \\ y_4'^i \end{bmatrix} = P_\pi \begin{bmatrix} Conv(w_1^i, X) \\ Conv(w_2^i, X) \\ Conv(w_3^i, X) \\ Conv(w_4^i, X) \end{bmatrix} = P_\pi A \begin{bmatrix} y_1^i \\ y_2^i \\ y_3^i \\ y_4^i \end{bmatrix}$$

$$= P_\pi \begin{bmatrix} a_1^{(1)} y_1^i + a_2^{(1)} y_2^i + a_3^{(1)} y_3^i + a_4^{(1)} y_4^i \\ a_1^{(2)} y_1^i + a_2^{(2)} y_2^i + a_3^{(2)} y_3^i + a_4^{(2)} y_4^i \\ a_1^{(3)} y_1^i + a_2^{(3)} y_2^i + a_3^{(3)} y_3^i + a_4^{(3)} y_4^i \\ a_1^{(4)} y_1^i + a_2^{(4)} y_2^i + a_3^{(4)} y_3^i + a_4^{(4)} y_4^i \end{bmatrix}$$

In this way, for an input information X of each layer, the TEE masks it as X'=X+R, where R may be, for example, a mask of the same size as X, and at the same time, a noise Conv(W',R) is pre-calculated offline. In this way, the input obtained by the GPU is the obfuscated model W' and the encrypted data X'. Then, the GPU performs heavy linear operation Y'=Conv(W',X')=Conv(W',X)+Conv(W',R). After the TEE obtains the input Y', the noise Conv(W',R) pre-calculated offline is removed, and then Conv(W',X) is restored by using a reverse operation, and finally the correct output result Y is restored in the TEE to obtain the second output result.

Specifically, $X_1'$ is input into a first convolutional layer of the second model to obtain an intermediate output result $Y_1'$ of the first convolutional layer, the intermediate output result $Y_1'$ of the first convolutional layer is sent to the trusted execution environment for restoring (restore parameters), and a reverse operation $f^{0-1}$ ( $Y_1'$ )is performed by using the obfuscation information corresponding to the first convolutional layer stored in the trusted execution environment to obtain an intermediate operation result (nonlinear op), thereby completing the processing of the first convolutional layer (offload layer 1).

Then, the intermediate operation result is returned to the second convolutional layer of the second model in the GPU to continue the operation until the operation of all the convolutional layers of the second model is completed, and then the second output result (Result) is obtained.

The method for implementing secure model inference described in the embodiment provides a secure model inference method based on the trusted execution environment (TEE). By dividing the convolution kernels into the group(s) and introducing the random information to combine with the group(s), the model can be more thoroughly obfuscated, and security of the model parameters can be ensured. By implementing a complex linear operation in the model inference process by using the acceleration device, and only performing a relatively simple operation in the trusted execution environment, the method can be applied to any trusted execution environment, and the problem of excessive calculation overhead can be avoided while achieving a high degree of protection of the model parameters. Thus, the model parameters can be protected from being acquired by an untrusted hardware accelerator, and the efficiency and accuracy of the inference process can be maintained, which can be better applied to the field of edge computing.

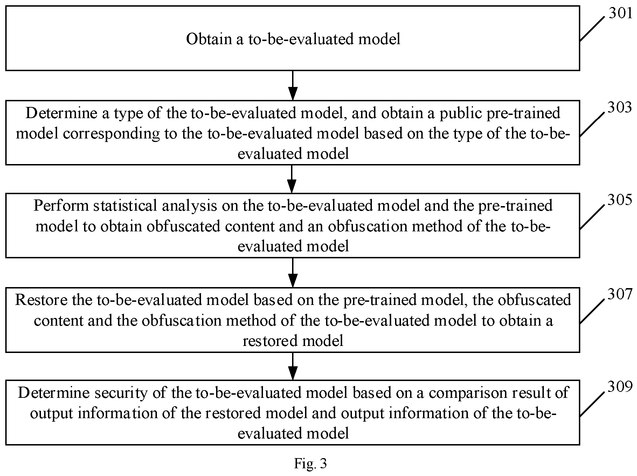

Based on the same inventive concept, corresponding to any of the above embodiments, the present disclosure further provides a model security evaluation method for evaluating security of the method for implementing secure model inference described in the present application. As shown in FIG. 3, the method comprises the following steps.

Step S301: a to-be-evaluated model is obtained.

The to-be-evaluated model may comprise the encrypted second model in the embodiments of the present application, and may also comprise other encrypted models in the related art, which is not limited in the embodiment.

Step S303: a type of the to-be-evaluated model is determined, and a public pre-trained model corresponding to the to-be-evaluated model is obtained based on the type of the to-be-evaluated model.

In the embodiment, a model used by a user is usually obtained by further training a public pre-trained model and then obfuscating. Therefore, a corresponding pre-trained model may be obtained based on the type of the to-be-evaluated model. Obfuscation of the model is mainly divided into two methods.

One method comprises nnsplitter and magnitude. This method modifies weights of a secret model as little as possible, so as to obtain an obfuscated model that is very similar to the secret model but completely unusable. The motivation of this design is to pursue concealment of obfuscation and reduce computational overhead of restoring a correct output by the TEE as much as possible.

The other method comprises Soter and shadownet, which completely disrupt the secret model at the lowest cost. In this way, the obfuscated model is completely different from the secret model. From an adversary's perspective, the obfuscated model and the secret model have no correspondence, which ensures that information of the secret model will not be leaked.

These obfuscation methods may introduce a simple adversary that performs black-box attacks to evaluate model parameter protection capability of the obfuscation methods, and use some norm clipping and fine-tuning attacks as supplementary experiments. However, the security of the obfuscation strategy is not analyzed and remains unknown.

Step S305: statistical analysis is performed on the to-be-evaluated model and the pre-trained model to obtain obfuscated content and an obfuscation method of the to-be-evaluated model.

In the embodiment, security of the to-be-evaluated model and the pre-trained model may be assessed by means of statistical analysis. A specific analysis process may comprise the following.

In some model obfuscation methods, in order to ensure efficiency of the inference process, model parameters are modified as little as possible, so that inference precision of an obfuscated model transmitted to the GPU is approximate to random guessing. However, a fixed modification strategy leads to an extreme statistical weight distribution, so that a user can quickly locate an abnormal interval.

This type of method follows an empirical conclusion: in machine learning, the larger the weight of a parameter, the greater the impact on a prediction effect of the model. The magnitude method selects the largest weights to be modified according to this experience, replaces the top 1% of the weights with random numbers, and restores this part of the weights in the TEE. Experiments show that prediction accuracy of the obfuscated model is close to that of random prediction under most grid structures. Similarly, nnsplitter selects as few important weights as possible by means of reinforcement learning. Under different networks and different hyperparameters, an agent of nnsplitter gradually reduces the number of selected convolution kernels to be modified, so that accuracy of the obfuscated model is the lowest.

Although this type of method achieves effectiveness and stealthiness by making few enough modifications, after being obfuscated by this type of method, the network always expresses similar properties, that is, there is an abnormality in the distribution of large weight parameters. This is because the obfuscation method is fixed and no randomness is introduced, then the obfuscation result of the method must develop to the "optimal" of the strategy, that is, an original weight is modified to a large weight.

In some embodiments, the nnsplitter scheme is reproduced under different networks and parameters. An abnormal weight performance can be located through a significant abnormal performance of the network parameters. In this way, by replacing weights in an abnormal interval, an attack model very similar to an original model can be obtained, and a fairly high accuracy can be achieved by training the model with an additional black-box attack budget. As shown in FIG. 5, it shows the model distribution of NNSplitter. The position of the abnormal interval and the accuracy of the obfuscated model are described by the words in the table. Among them, the position of the abnormal interval of the NNSplitter model of the 50 convolutional layers (resnet) trained in the CIFAR100 dataset is top 45.1%, and the accuracy of the obfuscated model is 1.870%; and the position of the abnormal interval of the NNSplitter model of the convolutional neural network (alexnet) trained in the CIFAR10 dataset is top 62.7%, and the accuracy of the obfuscated model is 10.030%; and the position of the abnormal interval of the NNSplitter model of vgg16_bn trained in the STL10 dataset is top 47.5%, and the accuracy of the obfuscated model is 9.950%.

In some model obfuscation methods, it is hoped to disrupt the distribution of all model parameters with "high cost performance", that is, the smallest obfuscation atom is set as a convolution kernel, and these atoms are randomly obfuscated by using methods with light overhead such as shuffle and scale. However, it is found through statistical analysis that atomic convolution kernels of a secret model and a public model have similar statistical distributions, and through this similarity, reverse obfuscation operation can be partially performed.

The core idea of this type of methods is to introduce as little extra computation as possible to completely disrupt the distribution of the model parameters. These two types of methods essentially follow the same encryption paradigm. For given weight parameters, scaling and shuffling are mainly used. By introducing a small amount of randomness, the model parameters can be shuffled more fully with convolution kernels as units. In order to verify whether scaling and shuffling can completely shuffle the distribution of the model parameters in the obfuscation method with convolution kernels as units, a pre-trained model with the same network structure is selected, and the convolution kernel distribution relationship between the pre-trained model and the secret model is assessed. Experiments prove that a cosine similarity distance between the pre-trained model and the secret model is very small, and in different networks, the proportion of convolution kernel indices after the obfuscated model is shuffled that can be found is close to 100%.

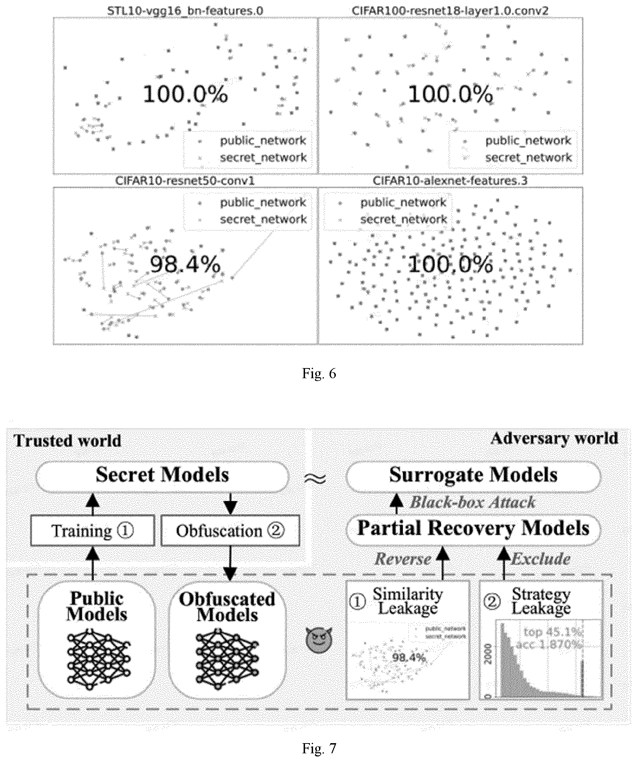

FIG. 6 shows a result of performing weight dimension reduction on two networks, where the lines represent a correct matching relationship. In the vgg16_bn model trained in the STL10 dataset, the similarity between the two networks is 100% in the features of the public pre-trained model (public_network) and the secret model (secret_network); in the 50 convolutional layers (resnet) model trained in the STL10 dataset, the similarity between the two networks is 98.4% in the features of the public pre-trained model (public _network) and the secret model (secret _network); in the 18resnet _layer1.0.con model trained in the CIFAR100 dataset, the similarity between the two networks is 100% in the features of the public pre-trained model (public_network) and the secret model (secret _network); and in the alexnet model trained in the CIFAR10 dataset, the similarity between the two networks is 100% in the features of the public pre-trained model (public _network) and the secret model (secret_network). As can be seen from the above, in most layers, indices before shuffling can be found through the public pre-trained weights.

Through statistical analysis of the to-be-evaluated model and the pre-trained model, it is found that the adversary's goal is to acquire private data of the model. For the model parameters declared "secure" after obfuscation and loaded into the GPU, the adversary hopes to crack the obfuscation relationship and train an attack model at a limited cost. The model has the same architecture as the secret model and performs as close as possible to the secret model on the same task.

In order to efficiently evaluate security performance of the model, an adversary with strong capability may be introduced. The adversary is allowed to perform a limited number of correct inferences, which is the same as assumptions of some black-box attacks. At the same time, the adversary can acquire all information in an unsecure world, for example, acquire model parameters and input data loaded on the GPU by pulling a memory of the GPU and listening to PCIE. In addition, the adversary may actively acquire background knowledge, comprising a task of model inference, details of a model architecture, and public pre-trained model parameters. In this way, the adversary may adaptively design an attack scheme by integrating all knowledge, and attempt to construct an attack model.

Step S307: the to-be-evaluated model is restored based on the pre-trained model, the obfuscated content and the obfuscation method of the to-be-evaluated model to obtain a restored model.

Step S309: security of the to-be-evaluated model is determines based on a comparison result of output information of the restored model and output information of the to-be-evaluated model.

As shown in FIG. 7, after a public pre-trained model (Public Models) is trained to obtain a secret model (Secret Models), the secret model is obfuscated to obtain an obfuscated model, and the obfuscated model is used as a to-be-evaluated model, and the obfuscated to-be-evaluated model is used as an attack object. In an adversary world, the adversary first performs statistical analysis on the to-be-evaluated model, determines an obfuscation method based on disclosed similarity between models, and then attempts to reverse the obfuscation operation. After roughly excluding randomness introduced by obfuscation based on a disclosed strategy (Strategy Leakage), a black-box attack is performed on an intermediate model. With reference to the design of knockoff, the adversary may be allowed to acquire an attack budget of 50 times/class, and the intermediate model is re-trained with 50 sample images and label results to obtain a restored model (Surrogate Model), and the restored model is very close to the pre-trained model.

For nnsplitter and magnitude, an abnormal interval is located by means of the statistical analysis method shown in FIG. 7. By adjusting a range of the abnormal interval adaptively, a modified interval can be located more precisely, and the parameters in the interval are replaced with the public pre-trained model. For SOTER and shadownet, a correct convolution kernel index is found by using cosine similarity, and then a size of the convolution kernel is re-measured adaptively. In some embodiments, it is not necessary to accurately restore the size of the convolution kernel, and the convolution kernel may be restored with a scale of 0.1 to obtain higher attack accuracy, and then the to-be-evaluated model is restored to obtain the restored model.

Finally, security of the to-be-evaluated model is determined based on a comparison result of output information of the restored model and output information of the to-be-evaluated model.

The following table shows specific attack results and model security evaluation results.

| | | No-shield | Magnitude | NNSplitter | ShadowNet | SOTER | Black-box | Ours |
|---|---|---|---|---|---|---|---|---|
| AlexNet | C10 | 84.0% | 10.4%→70.3% | 10.0%→81.4% | 9.4%→58.1% | 40.1%→74.2% | 17.1% | 11.7%→17.3% |
| | C100 | 56.3% | 2.0%→46.5% | 1.3%→56.0% | 0.9%→42.6% | 5.1%→51.5% | 21.2% | 1.0%→24.4% |
| | S10 | 75.4% | 10.5%→55.4% | 10.0%→75.5% | 8.9%→59.4% | 24.6%→55.1% | 32.1% | 9.5%→43.6% |
| ResNet18 | C10 | 94.5% | 10.5%→85.4% | 10.0%→93.2% | 11.1%→90.5% | 37.5%→89.8% | 30.0% | 10.7%→27.0% |
| | C100 | 79.6% | 0.9%→77.0% | 1.0%→76.7% | 0.9%→77.0% | 6.0%→76.1% | 25.0% | 1.1%→18.6% |
| | S10 | 83.1% | 10.4%→81.6% | 10.0%→82.6% | 9.0%→68.2% | 18.5%→75.6% | 28.2% | 9.2%→29.9% |
| ResNet50 | C10 | 94.8% | 8.6%→85.4% | 12.6%→91.2% | 10.2%→90.9% | 10.7%→89.8% | 24.9% | 10.0%→26.5% |
| | C100 | 82.3% | 1.0%→80.4% | 1.9%→77.5% | 1.0%→77.6% | 9.6%→78.6% | 17.9% | 1.0%→20.8% |
| | S10 | 85.3% | 10.6%→85.0% | 10.0%→85.2% | 10.7%→78.4% | 16.7%→78.2% | 26.0% | 10.0%→30.3% |
| VGG16.BN | C10 | 93.3% | 9.2%→86.2% | 10.0%→90.8% | 9.3%→89.1% | 10.2%→87.9% | 39.8% | 10.2%→31.2% |
| | C100 | 73.4% | 1.2%→69.1% | 7.4%→68.9% | 1.2%→70.0% | 5.4%→69.3% | 18.9% | 0.8%→24.0% |
| | S10 | 90.5% | 10.5%→89.2% | 10.0%→90.5% | 11.2%→84.2% | 11.9%→82.2% | 32.7% | 9.8%→28.4% |
| | Average | 3.16x | 2.91x | 3.09x | 2.82x | 2.90x | 1.00x | 1.03x |

The left side is the dataset, and the right side is the attack result. The attack result without protecting the to-be-evaluated model is represented as No-shield, which also represents the inference accuracy of the to-be-evaluated model. In each subsequent scheme the secret model is modified according to a specific obfuscation method to obtain a result of approximate random inference. The method for implementing secure model inference described in the present application is represented as (ours), the number of convolution kernels in each group is 4, and convolution kernels in all of the convolutional layers are grouped and combined with different random information.

After introducing the model security evaluation method described in the embodiment of the present application, the obfuscated model is partially restored, and the final attack result is close to the output of the to-be-evaluated model. The final attack effects of the four types of models are 2.91x, 3.09x, 2.82x, and 2.9x of a black-box attack baseline. Among them, for the NNSplitter obfuscation scheme with the fewest modifications, few abnormal weights are removed, the attack quality is the highest, and the accuracy of the original to-be-evaluated model reaches 97.8%. Correspondingly, since shadownet completely disrupts the scale and arrangement of the convolution kernels, the final attack effect is 91.8% of the original model.

Based on the above table, under this model security evaluation method, the attack effect on the method for implementing secure model inference in the present application is only 1/3 of other model obfuscation methods, and is 1.03x of the black-box attack. In the method for implementing secure model inference in the present application, no abnormality can be detected, and the accuracy of restoring the grouping permutation by using the public pre-trained model is almost equal to random guessing.

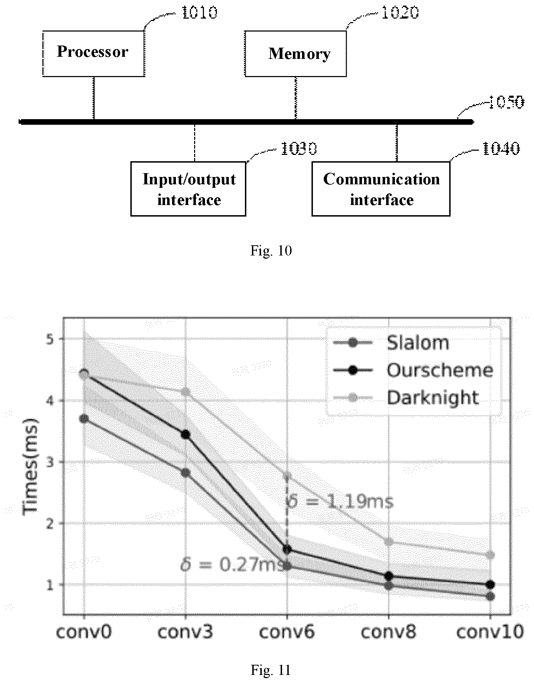

As shown in FIG. 11, a solid line represents an average value of overheads of the obfuscation methods, and the shadow represents the distribution of all the experiments. At the beginning of the convolutional network, since the shape of the input data is large, the IO overhead accounts for a relatively high proportion, and there is little difference between the frameworks. As the data out_channels increases, the operation load on the CPU side increases, which brings performance differences. However, since the inverse homomorphism operation of the present application (ourscheme) has the same $O(n)$ complexity as slalom, the performance overhead of the model obfuscation method of the present application is basically consistent with slalom. For example, in terms of overhead of the middle convolutional layer, the difference between the model obfuscation method of the present application and slalom is 0.27 ms, and darknight is 1.19 ms more than the model obfuscation method of the present application. Overall, the model obfuscation method of the present application improves security without introducing too much overhead.

The following table shows the results of the throughput test.

| Model | Pure GPU | | Slalom | | **Ours** | |
|---|---|---|---|---|---|---|
| | **AlexNet** | **VGG16** | **AlexNet** | **VGG16** | **AlexNet** | **VGG16** |
| C100 | 11050 | 7066 | 2173 | 578 | 2108 | 567 |
| C10 | 12129 | 7205 | 2188 | 604 | 2008 | 582 |
| S10 | 8603 | 3337 | 1949 | 289 | 1877 | 236 |

As shown in the above table, inference without TEE participation and the model obfuscation method of the present application are tested respectively in the same experimental environment. In general, the throughput of the model obfuscation method of the present application is 1/14-1/5 of that of pure GPU inference, which is only less than 3% of the throughput compared with slalom without protecting the model parameters. This shows that on the edge device, the model obfuscation method of the present application can give full play to the accelerator's capabilities, and meet the requirements of instant inference while protecting the model parameters additionally.

It can be understood that before using the technical solutions of the various embodiments of the present disclosure, the user will be informed of the type, scope of use, use scenarios, etc. of the involved personal information in an appropriate manner, and the user's authorization will be obtained.

For example, in response to receiving an active request from a user, prompt information is sent to the user, to clearly inform the user that the operation requested to be performed will require the acquisition and use of the user's personal information. Thereby, the user can independently choose whether to provide the personal information to software or hardware such as an electronic device, an application, a server, or a storage medium that performs the operations of the technical solutions of the present disclosure, according to the prompt information.

As an optional but non-limiting implementation, in response to receiving the active request from the user, the prompt information may be sent to the user in the form of a pop-up window, for example, and the prompt information may be presented in text in the pop-up window. In addition, the pop-up window may also comprise a selection control for the user to select "agree" or "disagree" to provide the personal information to the electronic device.

It can be understood that the above process of notifying and acquiring the user's authorization is only illustrative, and does not constitute a limitation on the implementations of the present disclosure, and other methods that satisfy relevant laws and regulations may also be applied to the implementations of the present disclosure.

It should be noted that the method of the embodiment of the present disclosure may be executed by a single device, such as a computer or a server. The method of the embodiment may also be applied to a distributed scenario, and be completed by multiple devices in cooperation with each other. In this distributed scenario, one of the multiple devices may only execute one or more steps in the method of the embodiment of the present disclosure, and the multiple devices may interact with each other to complete the method.

It should be noted that some embodiments of the present disclosure are described above. Other embodiments are within the scope of the appended claims. In some cases, the actions or steps recited in the claims may be performed in a different order than in the above embodiments and still achieve the desired results. Additionally, the processes depicted in the drawings do not necessarily require the particular order shown or in a continuous order to achieve the desired results. In certain implementations, multitasking and parallel processing are also possible or may be advantageous.

Based on the same inventive concept, corresponding to any of the above embodiments, the present disclosure further provides an apparatus for implementing secure model inference.

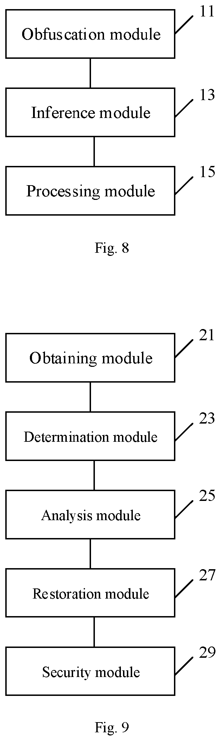

Referring to FIG. 8, the apparatus comprises:

an obfuscation module 11 configured to: divide at least partial convolution kernels of a first model in a trusted execution environment into a group(s), and performing obfuscation processing on the group(s) by using random information to obtain an encrypted second model, wherein obfuscation information used during the obfuscation processing is stored in the trusted execution environment, and the obfuscation information comprises grouping information of the convolution kernels and the random information corresponding to the group(s);
an inference module 13 configured to: deploy the second model in a model inference environment, and perform model inference on input information by using the second model to obtain a first output result; and
a processing module 15 configured to: process the first output result by using the obfuscation information in the trusted execution environment to obtain a second output result.

In some embodiments, the model inference environment comprises an edge device or a terminal device, and the model inference environment is a non-trusted execution environment.

In some embodiments, the obfuscation module 11 is further configured to:

divide convolution kernels in any convolutional layer in the first model into the group(s); and/or
mix and divide convolution kernels in a plurality of convolutional layers in the first model into the group(s).

In some embodiments, the apparatus is further configured to:
divide a preset number of convolution kernels with a smallest cosine similarity into a group.

In some embodiments, the random information corresponding to each of the group(s) comprises vector groups with a same number as that of convolution kernels in the each of the group(s) and the vector groups are linearly independent; and
the performing obfuscation processing on the group(s) by using the random information comprises: calculating a product of the each of the group(s) and the vector groups corresponding to the each of the group(s).

In some embodiments, different groups correspond to different random information.

In some embodiments, the apparatus is further configured to:
randomly shuffle indices of convolution kernels after the obfuscation processing.

In some embodiments, the first output result comprises intermediate output results corresponding to different convolutional layers of the second model and a final output result of the second mode; and

the processing module 15 is further configured to:
transmitting an intermediate output result to the trusted execution environment, performing reverse operation on the intermediate output result based on the obfuscation information to obtain an intermediate operation result, and sending the intermediate operation result to the second model for operation of a next convolutional layer; and
looping the above process until the operation of all the convolutional layers of the second model is completed to obtain the final output result of the second model; transmitting the final output result of the second model to the trusted execution environment, and performing reverse operation on the final output result of the second model based on the obfuscation information to obtain the second output result.

In some embodiments, the intermediate output results, the intermediate operation results, and the final output result are encrypted during transmission between the trusted execution environment and the second model.

In some embodiments, the second model is run in an acceleration device; and the inference model is further configured to:
accelerate linear calculation in the second model by using the acceleration device.

For the convenience of description, when the above apparatus is described, various modules are respectively described according to functions. Of course, when the present disclosure is implemented, the functions of each module may be implemented in the same or more pieces of software and/or hardware.

The apparatus in the above embodiment is used to implement the corresponding method in any one of the aforementioned embodiments, and has the beneficial effects of the corresponding method embodiment, which will not be repeated here.

Based on the same inventive concept, corresponding to any of the above embodiments, the present disclosure further provides a model security evaluation apparatus.

Referring to FIG. 9, the apparatus comprises:

an obtaining module 21 configured to: obtain a to-be-evaluated model, where the to-be-evaluated model comprises the second model according to the above embodiments;

a determination module 23 configured to: determine a type of the to-be-evaluated model, and obtain a public pre-trained model corresponding to the to-be-evaluated model based on the type of the to-be-evaluated model;

an analysis module 25 configured to: perform statistical analysis on the to-be-evaluated model and the pre-trained model to obtain obfuscated content and an obfuscation method of the to-be-evaluated model;

a restoration module 27 configured to: restore the to-be-evaluated model based on the pre-trained model, the obfuscated content and the obfuscation method of the to-be-evaluated model to obtain a restored model; and

a security module 29 configured to: determine security of the to-be-evaluated model based on a comparison result of output information of the restored model and output information of the to-be-evaluated model.

For the convenience of description, when the above apparatus is described, various modules are respectively described according to functions. Of course, when the present disclosure is implemented, the functions of each module may be implemented in the same or more pieces of software and/or hardware.

The apparatus in the above embodiment is used to implement the corresponding method in any one of the aforementioned embodiments, and has the beneficial effects of the corresponding method embodiment, which will not be repeated here.

Based on the same inventive concept, corresponding to any of the above embodiments, the present disclosure further provides an electronic device, comprising a memory, a processor, and a computer program stored in the memory and executable on the processor, where the processor, when executing the program, implements the method according to any one of the above embodiments.

FIG. 10 shows a schematic diagram of a more specific hardware structure of an electronic device provided by the embodiment. The device may comprise: a processor 1010, a memory 1020, an input/output interface 1030, a communication interface 1040, and a bus 1050. The processor 1010, the memory 1020, the input/output interface 1030, and the communication interface 1040 are connected to each other through the bus 1050 for communication inside the device.

The processor 1010 may be implemented by a general-purpose central processing unit (Central Processing Unit, CPU), a microprocessor, an application specific integrated circuit (Application Specific Integrated Circuit, ASIC), or one or more integrated circuits, etc., which is used to execute related programs to implement the technical solutions provided by the embodiments of the present specification.

The memory 1020 may be implemented in the form of a read only memory (Read Only Memory, ROM), a random access memory (Random Access Memory, RAM), a static storage device, a dynamic storage device, etc. The memory 1020 may store an operating system and other application programs. When the technical solutions provided by the embodiments of the present specification are implemented by software or firmware, the related program code is stored in the memory 1020 and invoked by the processor 1010 for execution.

The input/output interface 1030 is used to connect to an input/output module to implement information input and output. The input/output module may be configured in the device as a component (not shown in the figure), or may be connected to the device externally to provide corresponding functions. The input device may comprise a keyboard, a mouse, a touch screen, a microphone, various sensors, etc., and the output device may comprise a display, a speaker, a vibrator, an indicator light, etc.

The communication interface 1040 is used to connect to a communication module (not shown in the figure) to implement communication interaction between the device and other devices. The communication module may implement communication in a wired manner (for example, USB, network cable, etc.), or may also implement communication in a wireless manner (for example, mobile network, WIFI, Bluetooth, etc.).

The bus 1050 comprises a path for transmitting information between components (for example, the processor 1010, the memory 1020, the input/output interface 1030, and the communication interface 1040) of the device.

It should be noted that although the above device only shows the processor 1010, the memory 1020, the input/output interface 1030, the communication interface 1040, and the bus 1050, in a specific implementation process, the device may further comprise other components necessary for normal operation. In addition, those of ordinary skill in the art can understand that the above device may also comprise only components necessary for implementing the technical solutions of the embodiments of the present specification, and may not necessarily comprise all the components shown in the figure.

The electronic device in the above embodiment is used to implement the corresponding method in any one of the aforementioned embodiments, and has the beneficial effects of the corresponding method embodiment, which will not be repeated here.

Based on the same inventive concept, corresponding to any of the above embodiments, the present disclosure further provides a non-transitory computer-readable storage medium, where the non-transitory computer-readable storage medium stores computer instructions, and the computer instructions are used to cause the computer to perform the method according to any one of the above embodiments.

The computer-readable medium in the embodiment comprises permanent and non-permanent, movable and non-movable media, and information storage may be implemented by any method or technology. Information may be computer-readable instructions, data structures, program modules, or other data. Examples of computer storage media comprise, but are not limited to, phase-change memory (PRAM), static random access memory (SRAM), dynamic random access memory (DRAM), other types of random access memory (RAM), read-only memory (ROM), electrically erasable programmable read-only memory (EEPROM), flash memory or other memory technologies, CD-ROM, digital versatile disc (DVD) or other optical storage, magnetic cassette, magnetic tape magnetic disk storage or other magnetic storage devices, or any other non-transmission medium, which can be used to store information accessible by a computing device.

The computer instructions stored in the storage medium of the above embodiments are used to cause the computer to perform the method according to any one of the above embodiments, and have the beneficial effects of the corresponding method embodiment, which will not be repeated here.

Based on the same inventive concept, corresponding to any of the above embodiments, the present disclosure further provides a computer program product, which comprises a computer program. In some embodiments, the computer program is executable by one or more processors to cause the processor to execute the method for implementing secure model inference and/or the model security evaluation method. Corresponding to the execution subject corresponding to each step in each embodiment of the method, the processor that executes the corresponding step may belong to the corresponding execution subject.

The computer program product of the above embodiment is used to cause the processor to execute the information processing method according to any one of the above embodiments, and has the beneficial effects of the corresponding method embodiment, which will not be repeated here.

It should be understood by those of ordinary skill in the art that the discussion of any of the above embodiments is only exemplary, and is not intended to imply that the scope of the present disclosure (comprising claims) is limited to these examples. Under the idea of the present disclosure, the technical features in the above embodiments or different embodiments may also be combined, and the steps may be implemented in any order, and there are many other changes in different aspects of the embodiments of the present disclosure as described above, which are not provided in detail for the sake of brevity.

In addition, in order to simplify the description and discussion, and in order not to make the embodiments of the present disclosure difficult to understand, the well-known power/ground connections with integrated circuit (IC) chips and other components may or may not be shown in the provided drawings. In addition, the apparatus may be shown in the form of a block diagram, so as to avoid making the embodiments of the present disclosure difficult to understand, and this also takes into account the fact that the details of the implementations of these block diagram apparatuses are highly dependent on the platform on which the embodiments of the present disclosure are to be implemented (that is, these details should be completely within the understanding of those of ordinary skill in the art). In the case where specific details (for example, circuits) are set forth to describe exemplary embodiments of the present disclosure, it should be obvious to those of ordinary skill in the art that the embodiments of the present disclosure may be implemented without these specific details or when these specific details are changed. Therefore, these descriptions should be considered as illustrative rather than restrictive.

Although the present disclosure has been described in combination with specific embodiments of the present disclosure, according to the foregoing description, many substitutions, modifications and variations of the embodiments will be obvious to those of ordinary skill in the art. For example, other memory architectures (e.g., dynamic RAM (DRAM)) may use the discussed embodiments.

The embodiments of the present disclosure are intended to cover all such substitutions, modifications and variations falling within the broad scope of the appended claims. Therefore, any omission, modification, equivalent substitution, improvement, etc. made within the spirit and principles of the embodiments of the present disclosure shall be comprised in the protection scope of the present disclosure.

**Claims**

1. A method for implementing secure model inference, comprising:

dividing at least partial convolution kernels of a first model in a trusted execution environment into a group(s), and performing obfuscation processing on the group(s) by using random information to obtain an encrypted second model, wherein obfuscation information used during the obfuscation processing is stored in the trusted execution environment, and the obfuscation information comprises grouping information of the convolution kernels and the random information corresponding to the group(s)(101);

deploying the second model in a model inference environment, and performing model inference on input information by using the second model to obtain a first output result(103); and

processing the first output result by using the obfuscation information in the trusted execution environment to obtain a second output result(105).

2.   The method according to claim 1, wherein the model inference environment comprises an edge device or a terminal device, and the model inference environment is a non-trusted execution environment.

3.   The method according to claim 1, wherein the dividing at least partial convolution kernels of the first model in the trusted execution environment into a group(s) comprises:

dividing convolution kernels in any convolutional layer in the first model into the group(s); and/or
mixing and dividing convolution kernels in a plurality of convolutional layers in the first model into the group(s).

4.   The method according to claim 3, further comprising:
dividing a preset number of convolution kernels with a smallest cosine similarity into a group.

5.   The method according to claim 1, wherein the random information corresponding to each of the group(s) comprises vector groups with a same number as that of convolution kernels in the each of the group(s) and the vector groups are linearly independent; and
the performing obfuscation processing on the group(s) by using the random information comprises: calculating a product of the each of the group(s) and the vector groups corresponding to the each of the group(s).

6.   The method according to claim 5, wherein different groups correspond to different random information.

7.   The method according to claim 1, further comprising:
randomly shuffling indices of convolution kernels after the obfuscation processing.

8.   The method according to claim 1, wherein the first output result comprises intermediate output results corresponding to different convolutional layers of the second model and a final output result of the second model; and
the processing the first output result by using the obfuscation information in the trusted execution environment to obtain the second output result comprises:

transmitting an intermediate output result to the trusted execution environment, performing reverse operation on the intermediate output result based on the obfuscation information to obtain an intermediate operation result, and sending the intermediate operation result to the second model for operation of a next convolutional layer; and looping the above process until the operation of all the convolutional layers of the second model is completed to obtain the final output result of the second model; transmitting the final output result of the second model to the trusted execution environment, and performing reverse operation on the final output result of the second model based on the obfuscation information to obtain the second output result.

9.   The method according to claim 8, wherein the intermediate output results, the intermediate operation results, and the final output result are encrypted during transmission between the trusted execution environment and the second model.

10.  The method according to claim 1, wherein the second model is run in an acceleration device; and the performing model inference on the input information by using the second model comprises:
accelerating linear calculation in the second model by using the acceleration device.

11.  A model security evaluation method, comprising:

obtaining a to-be-evaluated model, wherein the to-be-evaluated model is an encrypted second model obtained by dividing at least partial convolution kernels of a first model in a trusted execution environment into a group(s), and performing obfuscation processing on the group(s) by using random information(301);

determining a type of the to-be-evaluated model, and obtaining a public pre-trained model corresponding to the to-be-evaluated model based on the type of the to-be-evaluated model(303);

performing statistical analysis on the to-be-evaluated model and the pre-trained model to obtain obfuscated content and an obfuscation method of the to-be-evaluated model(305);

restoring the to-be-evaluated model based on the pre-trained model, the obfuscated content and the obfuscation method of the to-be-evaluated model to obtain a restored model(307); and

determining security of the to-be-evaluated model based on a comparison result of output information of the restored model and output information of the to-be-evaluated model(309).

12. An apparatus for implementing secure model inference, comprising:

an obfuscation module, configured to: divide at least partial convolution kernels of a first model in a trusted execution environment into a group(s), and performing obfuscation processing on the group(s) by using random information to obtain an encrypted second model, wherein obfuscation information used during the obfuscation processing is stored in the trusted execution environment, and the obfuscation information comprises grouping information of the convolution kernels and the random information corresponding to the group(s) (11);

an inference module, configured to: deploy the second model in a model inference environment, and perform model inference on input information by using the second model to obtain a first output result (13); and

a processing module, configured to: process the first output result by using the obfuscation information in the trusted execution environment to obtain a second output result (15).

13. A model security evaluation apparatus, comprising:

an obtaining module, configured to: obtain a to-be-evaluated model, wherein the to-be-evaluated model is an encrypted second model obtained by dividing at least partial convolution kernels of a first model in a trusted execution environment into a group(s), and performing obfuscation processing on the group(s) by using random information (21);

a determination module, configured to: determine a type of the to-be-evaluated model, and obtain a public pre-trained model corresponding to the to-be-evaluated model based on the type of the to-be-evaluated model(23);

an analysis module, configured to: perform statistical analysis on the to-be-evaluated model and the pre-trained model to obtain obfuscated content and an obfuscation method of the to-be-evaluated model (25);

a restoration module, configured to: restore the to-be-evaluated model based on the pre-trained model, the obfuscated content and the obfuscation method of the to-be-evaluated model to obtain a restored model(27); and

a security module, configured to: determine security of the to-be-evaluated model based on a comparison result of output information of the restored model and output information of the to-be-evaluated model(29).

14. An electronic device, comprising a memory, a processor, and a computer program stored in the memory and executable on the processor, wherein the processor, when executing the program, implements the method according to any one of claims 1 to 11.

15. A computer program product, comprising computer program instructions, wherein the computer program instructions, when executed on a computer, cause the computer to perform the method according to any one of claims 1 to 11.

Divide at least partial convolution kernels of a first model in a trusted execution environment into a group(s), and performing obfuscation processing on the group(s) by using random information to obtain an encrypted second model , wherein obfuscation information used during the obfuscation processing is stored in the trusted execution environment, and the obfuscation information comprises grouping information of the convolution kernels and the random information corresponding to the group(s)

101

Deploy the second model in a model inference environment, and perform model inference on input information by using the second model to obtain a first output result

103

Process the first output result by using the obfuscation information in the trusted execution environment to obtain a second output result

105

Fig. 1

CIFAR100-resnet18-conv1   CIFAR100-resnet18-conv1   CIFAR100-resnet18-conv1

Fig. 2

| Obtain a to-be-evaluated model | 301 |

↓

| Determine a type of the to-be-evaluated model, and obtain a public pre-trained model corresponding to the to-be-evaluated model based on the type of the to-be-evaluated model | 303 |

↓

| Perform statistical analysis on the to-be-evaluated model and the pre-trained model to obtain obfuscated content and an obfuscation method of the to-be-evaluated model | 305 |

↓

| Restore the to-be-evaluated model based on the pre-trained model, the obfuscated content and the obfuscation method of the to-be-evaluated model to obtain a restored model | 307 |

↓

| Determine security of the to-be-evaluated model based on a comparison result of output information of the restored model and output information of the to-be-evaluated model | 309 |

Fig. 3

Fig. 4

Fig. 5

Fig. 6

Fig. 7

Obfuscation module — 11

Inference module — 13

Processing module — 15

Fig. 8

Obtaining module — 21

Determination module — 23

Analysis module — 25

Restoration module — 27

Security module — 29

Fig. 9

Fig. 10

Fig. 11

| | Europäisches Patentamt European Patent Office Office européen des brevets | **EUROPEAN SEARCH REPORT** | **Application Number** EP 24 21 6284 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | TONG ZHOU ET AL: "NNSplitter: An Active Defense Solution for DNN Model via Automated Weight Obfuscation", ARXIV.ORG, CORNELL UNIVERSITY LIBRARY, 201 OLIN LIBRARY CORNELL UNIVERSITY ITHACA, NY 14853, 16 August 2023 (2023-08-16), XP091585875, | 1-4,7-15 | INV. G06F21/60 |
| Y | * the whole document * | 5,6 | |
| Y | ZHICHUANG SUN ET AL: "ShadowNet: A Secure and Efficient System for On-device Model Inference", ARXIV.ORG, CORNELL UNIVERSITY LIBRARY, 201 OLIN LIBRARY CORNELL UNIVERSITY ITHACA, NY 14853, 14 June 2021 (2021-06-14), XP081976513, | 5,6 | |
| A | * the whole document * | 1-4,7-15 | |
| Y | US 2022/114014 A1 (CHEN XUN [US] ET AL) 14 April 2022 (2022-04-14) | 5,6 | |
| A | * paragraph [0051] * | 1-4,7-15 | TECHNICAL FIELDS SEARCHED (IPC) |
| A | WO 2022/075538 A1 (SAMSUNG ELECTRONICS CO LTD [KR]) 14 April 2022 (2022-04-14) * paragraph [0064] - paragraph [0144] * | 1-15 | G06F G06Q |
| A | KR 2022 0047498 A (SAMSUNG ELECTRONICS CO LTD [KR]) 18 April 2022 (2022-04-18) * paragraph [0020] - paragraph [0096] * | 1-15 | |

The present search report has been drawn up for all claims

| Place of search | Date of completion of the search | Examiner |
|---|---|---|
| Munich | 1 May 2025 | Jullien, Sami |

## ANNEX TO THE EUROPEAN SEARCH REPORT
## ON EUROPEAN PATENT APPLICATION NO.

EP 24 21 6284

This annex lists the patent family members relating to the patent documents cited in the above-mentioned European search report.
The members are as contained in the European Patent Office EDP file on
The European Patent Office is in no way liable for these particulars which are merely given for the purpose of information.

01-05-2025

| Patent document cited in search report | Publication date | Patent family member(s) | Publication date |
|---|---|---|---|
| US 2022114014 A1 | 14-04-2022 | KR 20220047498 A<br>US 2022114014 A1 | 18-04-2022<br>14-04-2022 |
| WO 2022075538 A1 | 14-04-2022 | NONE | |
| KR 20220047498 A | 18-04-2022 | KR 20220047498 A<br>US 2022114014 A1 | 18-04-2022<br>14-04-2022 |

EPO FORM P0459

For more details about this annex : see Official Journal of the European Patent Office, No. 12/82

**REFERENCES CITED IN THE DESCRIPTION**

**Patent documents cited in the description**

• CN 202410371126